# EUROPEAN PATENT APPLICATION

(11) **EP 3 239 885 A1**
(43) Date of publication of application: **01.11.2017**
(21) Application number: 16305488.5
(22) Date of filing: 27.04.2016
(51) Int. Cl.: G06F 21/62

(54) **DATA ACCESS CONTROL USING NAME RULES AND OBJECT CLASS RULES**

(71) Applicant: Hewlett Packard Enterprise Development LP, Houston, TX 77070 (US)
(72) Inventor: The designation of the inventor has not yet been filed
(74) Representative: Delumeau, François Guy

(57) **Abstract**

A method, a computing system, and a non-transitory memory resource containing instructions for a database access control technique are provided. In an example, the method includes receiving a transaction directed to an object of a dataset. It is determined whether the transaction is prohibited by a set of distinguished name rules, and based on the set of distinguished name rules not prohibiting the transaction, it is determined whether the transaction is prohibited by a set of object class rules. Based on the set of distinguished name rules and the set of object class rules not prohibiting the transaction, the transaction is provided for performing on the dataset.

## Description

### BACKGROUND

As data sets continue to grow in size and complexity, a multitude of specialized data structures have been developed to serve the data quickly and securely. Many of these data structures are optimized for particular uses and applications. For example, Lightweight Directory Access Protocol (LDAP) provides a directory structure for accessing data that is optimized for read-heavy datasets such as password storage, internet directories, personnel directories, and more. Being a directory, LDAP may be used in conjunction with a database to quickly locate data within the database, and it provides good read performance even as the underlying database grows to billions of entries or more.

LDAP organizes data as a collection of objects arranged hierarchically in a tree-based structure, which may be referred to as a DIT (document/directory information tree). When using LDAP or any other data architecture, access controls may be implemented in order to prevent unauthorized access. In the LDAP example, suitable access control rules may be defined that limit users to particular subsets of the objects in the DIT.

### BRIEF DESCRIPTION OF THE DRAWINGS

Certain examples are described in the following detailed description with reference to the drawings, of which:
FIG. 1 is a block diagram of a computing architecture for transaction handling and data access control according to some examples of the present disclosure.
FIG. 2 is a diagram of a data structure according to some examples of the present disclosure.
FIG. 3 is a flow diagram of a method of access control according to some examples of the present disclosure.
FIG. 4 is a diagram of a Distinguished Name (DN) rule according to some examples of the present disclosure.
FIG. 5 is a diagram of an object class rule according to some examples of the present disclosure.
FIG. 6 is a flow diagram of a method of access control using attribute filtering according to some examples of the present disclosure.
FIG. 7 is a diagram of an attribute rule according to some examples of the present disclosure.

### DETAILED DESCRIPTION OF SPECIFIC EXAMPLES

There are a large number of data structures and architectures to choose from when implementing a database, each with its own strengths. A particular data structure may be selected, in part, based on how the data is to be used. Lightweight Directory Access Protocol (LDAP) is one example of a read-optimized data structure. LDAP is well suited for large datasets that are read more often than written (e.g., thousands more reads than writes) and provides quick responses to transactions with low read latency. For these reason, LDAP is often used in high traffic applications.

In these applications and others, overall performance and transaction throughput depend on the speed of the database and the directory as well as other factors. For example, a data architecture may implement various access controls that restrict access to parts of the data set. The process of determining whether a user has permission to perform a given transaction is non-trivial and may incur significant overhead. In LDAP and other high traffic applications where latency is paramount, it may be beneficial if access control and other data access functions are also low latency.

To address this issue and others, the present disclosure provides an access control mechanism that quickly determines whether a transaction is permitted so that the performance of the directory and/or database is not adversely impacted. The access control technique may provide improvements to the access control rules as well as to the mechanism by which they are applied.

In an example of access control for an LDAP data structure, three different types of rules are provided: Distinguished Name (DN) rules, object class rules, and attribute rules. DN rules apply to a subset of objects identified by their names. Object class rules apply to a subset of objects identified by the class or classes to which the objects belong. Attribute rules apply to individual attributes of an object and allow selected attributes to be hidden from the user. Each type of rule is specifically structured for efficiency while still providing a high degree of granularity so that permissions can be carefully controlled.

The rules may be queried in order of increasing granularity. In an example, when a transaction is received, the DN of the object being accessed is compared to the DN rules to determine whether the transaction is prohibited. If the transaction is prohibited by a DN rule, it is denied without any further determination. DN rules may be evaluated without accessing the database thereby avoiding the associated overhead. Because DN rules are quick to evaluate and cover a large number of objects in a concise manner, this comparison may rule out many prohibited transactions.

If the transaction is permitted by the DN rules, an object class associated with the object being accessed is compared to the object class rules. Since many transactions are denied by the DN rules before reaching the object class rules, fewer transactions may be checked against the object class rules and fewer object class rules may be used. Thus, a combination of DN rules and object class rules may be faster than alternatives with object class rules alone. If the transaction is prohibited by the object class rules, it is denied without any further determination.

However, if the transaction is permitted by both the DN rules and the object class rules, the attribute rules may be used to determine whether the user has access to all the attributes of the object being accessed. In contrast to denying a transaction outright, an attribute rule may deny the transaction in part and still allow it to proceed on the permitted attributes. By blocking access to selected attributes, but not necessarily the target object itself, the attribute rules may act as a data filter and provide fine grained control over user access. Here as well, many prohibited transactions will be denied by the DN rules and the object class rules before the attribute rules are applied.

By these mechanisms and others, the present disclosure provides substantial real-world improvements and resolves several issues pertaining to access control in high-traffic data structures. For instance, by searching the rules in order of increasing granularity (*e.g*., DN rules, then object class rules, then attribute rules), in many applications, the bulk of the prohibited transactions are denied in the earlier stages. This may improve response time and reduce processing and I/O overhead associated with access control.

Furthermore, the limited number of different types of access control rules (*e.g*., three types) may improve the speed at which access control determinations are made and may also make the rules easier to write, easier to comprehend, easier to model, and easier to debug. Some of the rule types, (*e.g.,* DN rules) may be checked without accessing the database itself. As database I/O can be costly, denying transactions without accessing the database may further improve response time. Despite the limited number of rule types, the rules still provide a high degree of control and granularity.

The use of regular expressions in the rules may further reduce the number of rules to be searched and thereby improve performance. Furthermore, the simplicity and the conciseness of the rules may allow some or all of the access control rules to be cached, which may further improve performance.

Various examples are described with reference to the following figures. Unless noted otherwise, these figures and their accompanying description are non-limiting and no element is required for any particular example. In that regard, features from one example may be freely incorporated into other examples without departing from the spirit and scope of the disclosure.

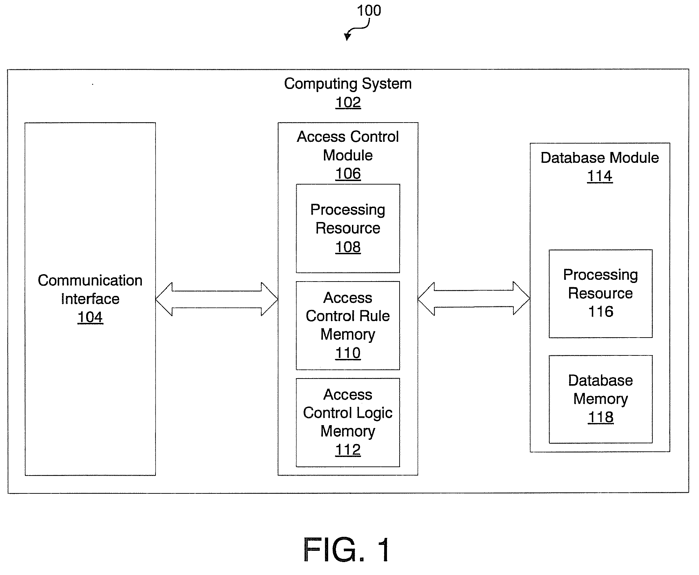

FIG. 1 is a block diagram of a computing architecture 100 for transaction handling and data access control according to some examples of the present disclosure. The computing architecture 100 includes a computing system 102 operable to perform access control on transactions as they are received. The computing system 102 may take any suitable form such as a desktop computer, a laptop computer, a server, a switch, a router, and/or a portable device. For clarity and ease of explanation, the computing system 102 is represented as a single entity, although the system 102 may include any number of computing devices operating together in order to perform a function. In that regard, the computing system 102 may include a single unitary computing devices, a cluster of discrete computing devices, or any permutation thereof.

The computing system 102 may include a communication interface 104 operable to receive a transaction that contains a request to access (*e.g.,* read, write, modify, *etc.*) a data structure. Accordingly, the communication interface 104 may support any suitable physical protocol for communicating transactions and responses such as Ethernet, IEEE 802.11 WiFi, Fibre Channel, and/or other wired or wireless protocols. The physical protocol may be used to send and receive data using any suitable communication protocol, and in some examples, the communication interface 104 is operable to receive transactions via TCP (*i.e.*, TCP/IP) over Ethernet.

The computing system 102 may include an access control module 106 operable to determine whether received transactions are permitted. Whether a transaction is permitted may depend on the user providing the transaction, a group to which the user belongs, the operation (*e.g*., read, write, modify, *etc*.) being performed, the object being operated upon, the type of object being operated on, the attributes of the object being operated upon, and/or any other suitable aspect of the transaction or the data. The access control module 106 may include a processing resource 108 to perform this determination. In that regard, the processing resource 108 may include any number and combination of Central Processing Units (CPUs), Graphics Processing Units (GPUs), microcontrollers, Application-Specific Integrated Circuits (ASICs), Field-Programmable Gate Arrays (FPGAs), and/or other processing resources.

The access control module 106 may include one or more memories such as an access control rule memory 110 and/or an access control logic memory 112. The access control rule memory 110 is operable to store rules used by the processing resource 108 to determine whether received transactions are permitted. The access control rule memory 110 may include any type of suitable memory device such as, but not limited to, Random Access Memory (RAM), battery-backed RAM, Solid State storage Devices (SSDs), Hard Disk Drives (HDDs), optical media, and/or other memory devices. In one example, the access control rule memory 110 stores at least one access control rule in a RAM-based cache.

Similarly, the access control logic memory 112 is operable to store instructions used by the processing resource 108 to apply the access control rules to determine whether received transactions are permitted. The access control logic memory 112 may include any number of non-transitory memory devices including battery-backed RAM, SSDs, HDDs, optical media, and/or other memory devices. The access control logic memory 112 may share at least some memory devices with the access control rule memory 110.

Upon determining that a transaction is permitted, at least in part, the access control module 106 may provide it to a database module 114 so that the transaction may be performed. The database module 114 may be part of another computing entity or incorporated into the computing system 102 as shown in FIG. 1.

The database module 114 may include a processing resource 116 substantially similar to the processing resource 108 of the access control module 106 to control and carry out received transactions. In that regard, the processing resource 116 of the database module 114 may include any number of CPUs, GPUs, microcontrollers, ASICS, FPGAs, and/or other processing resources. In some examples, the processing resource 116 of the database module 114 shares at least one processing element in common with the processing resource 108 of the access control module 106.

The database module 114 may also include a database memory 118 operable to store the data structure upon which the permitted transaction is performed. The database memory 118 may include any number of memory devices including RAM, battery-backed RAM, SSDs, HDDs, optical media, and/or other memory devices.

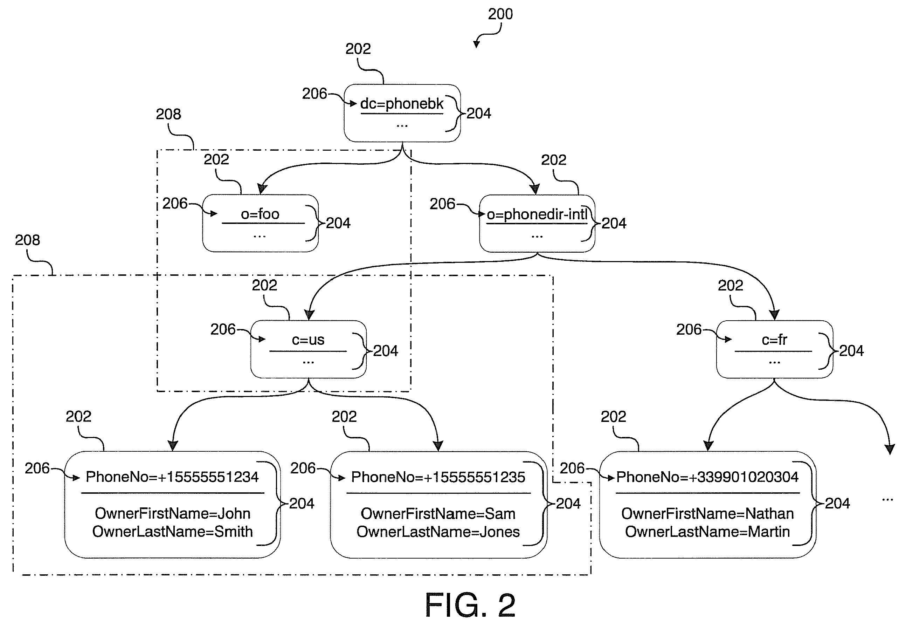

The data in the database memory 118 may be stored and structured according to any suitable arrangement. FIG. 2 is a diagram of a data structure 200 according to some examples of the present disclosure. While the illustrated data structure 200 is typical of an LDAP data structure, it is understood that the principles of the present disclosure apply equally to any suitable data structure.

In the illustrated examples, data in the data structure 200 is arranged into objects 202. The data structure 200 defines a hierarchy where some objects 202 are parents of other objects 202, referred to as child objects of the parent object. The result is a tree-based arrangement where each object 202 descends from a single root object either directly or via some number of parents, grandparents, *etc.* In an LDAP example, this tree-based data structure may be referred to as a DIT (document information tree or directory information tree).

Each object 202 in the DIT may have any number of associated attributes 204. In the illustrated examples, attributes are represented in the form: AttributeName=Value, although this is merely for illustration and may not be representative of how the attributes are stored in the data structure 200. These attributes may be used to assign names to the objects 202. In that regard, each object 202 has a unique identifier referred to as a Distinguished Name (DN). In some examples, DNs for the objects are determined according to a relative naming scheme. In these examples, each object 202 has a Relative Distinguished Name (RDN) 206 from which a DN is determined. An RDN 206 may be determined based on one or more attributes of the respective object 202. The RDN for each object 202 is different from those of its immediate siblings (*i.e.*, objects that share the same parent). Accordingly, the RDN 206 may be determined as those attribute or attributes of the object 202 that are different from those of the object's immediate siblings.

From these RDNs 206, each object 202 may be assigned a DN that is unique to the object 202 based on the object's RDN 206 and the RDNs 206 of any parent object(s) up through the hierarchy to the root node. A DN may take the form:
PhoneNo=+15555551234,c=us,o=phonedir-intl,dc-phonebk
although as the DN is merely a unique identifier, it may take any other suitable form. As described in detail below, the DN may be used by access control rules to refer to specific objects 202.

The access control rules may also refer to object by their respective groups 208. In that regard, each object 202 may belong to one or more groups 208, of which two are illustrated. A group may contain any number of objects 202 anywhere in the hierarchy of the DIT.

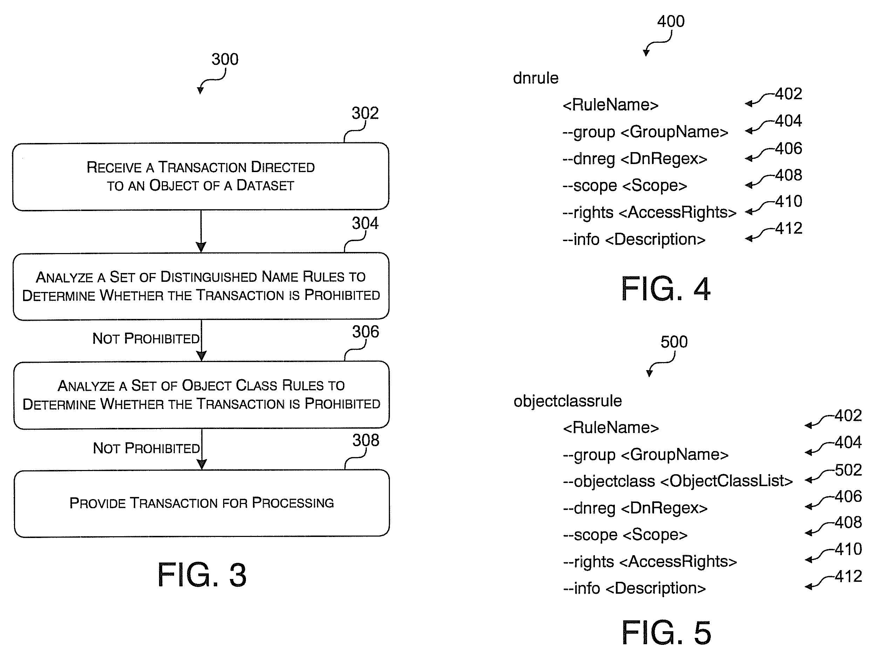

A technique for applying access controls to a data structure such as the data structure 200 of FIG. 2 using the computing system 102 is described with reference to FIGS. 3-5. FIG. 3 is a flow diagram of a method 300 of access control according to some examples of the present disclosure. It is understood that the description of method 300 is non-limiting, and steps may be added to and omitted from the method 300 without departing from the disclosure. Furthermore, unless noted otherwise, processes of the method 300 may be performed in any order including being performed concurrently by one or more entities. FIG. 4 is a diagram of a DN rule 400 according to some examples of the present disclosure. FIG. 5 is a diagram of an object class rule 500 according to some examples of the present disclosure.

The access control method 300 may prevent certain users from accessing certain parts of the data structure. Access controls may be used to hide data from unauthorized users, to prevent accidents and tampering, and/or for any other purpose. Thus, the access control method 300 may deny transactions that attempt to read, write, or otherwise access portions of the data structure that the transaction owner does not have permission to access.

Referring first to block 302 of FIG. 3, the access control module 106 of the computing system 102 or other computing entity receives a data transaction that includes an instruction to access a data structure such as the data structure 200 of FIG. 2. The access control module 106 may receive the transaction from the communication interface 104 or any other providing entity.

Referring to block 304 of FIG. 3 and to FIG. 4, the access control module 106 determines whether the received transaction is permitted by a set of DN rules. The set may include any number of DN rules, including zero, although a set with zero DN rules is a degenerate case. The access control module 106 compares aspects of the transaction such as the user that provided the transaction, the DN of the object 202 to which the transaction is directed, and/or the operation (*e.g.,* read, write, modify, *etc.*) performed by the transaction to each of the DN rules 400 in the set until a DN rule 400 that prohibits or permits the transaction is found. If a DN rule 400 prohibits the transaction, it is denied. If the set of DN rules does not prohibit the transaction (which covers both the case where a DN rule 400 explicitly permits the transaction as well as the case where the DN rules 400 are silent), further determinations are made.

An example of a DN rule 400 is shown in FIG. 4 and includes any number of fields. The illustrated fields include a name field 402 that specifies a name for the particular DN rule and may assist readability and debugging. The DN rule may include a user group field 404 that specifies one or more users or groups of users to whom the rule applies. As with objects 202, users may belong to one or more user groups. Access control rules may be selectively enforced based on the user group, and accordingly, in an example, the determination of block 304 includes comparing a user group of the user to the user group field 404 to determine whether a DN rule applies. Additionally or in the alternative, a DN rule 400 may include a list of users to which the rule applies.

In some examples, the DN rule 400 includes a DN field 406 that specifies the DN of one or more data objects 202. The rule is enforced if the transaction is directed to a DN of an object that matches the DN field 406, and the determination of block 304 may include comparing a DN of the transaction with the DN field 406 to determine whether a particular rule applies. It should be noted that any of the fields, including the DN field 406, may support regular expressions, wildcarding, and/or Boolean operators. This allows a single DN rule to apply to any number of data objects 202.

The DN rule 400 may also include a scope field 408 that specifies whether the DN rule also applies to family members of objects 202 specified in the DN field 406. The scope field 408 may specify any combination of objects and their family members and may specify that a rule applies to family members, not the objects in the DN field 406 themselves. As a few examples, a value of "base" may indicate that the DN rule 400 applies to object(s) 202 that match the DN field 406. A value of "one" may indicate that the DN rule 400 applies to direct children of the object(s) 202 that match the DN field 406 but not the matching object(s) 202 themselves. A value of "sub" may indicate that the DN rule 400 applies to the object(s) that match the DN field 406 and all their descendants. Of course, the scope field 408 may specify any familial relationship (*e.g.,* every other generation, *etc.*). Accordingly, in an example, the determination of block 304 includes comparing a DN associated with the transaction to both the DN field 406 and the scope field 408 of a particular rule to determine whether the rule applies.

In some examples, the DN rule 400 includes a rights field 410 that specifies which rights are being granted and by extension which transaction operations (*e.g.,* read, write, modify, *etc*.) are permitted. In such examples, the determination of block 304 includes comparing the type of operation being performed by a transaction to a rights field 410 of a DN rule 400 to determine whether the rule applies.

The DN rule 400 may include an information field 412 that provides comments, debugging information, and/or any other suitable descriptive information regarding the DN rule 400. It is noted that each of the fields of the DN rule 400 is optional and that the fields may be presented in any order.

In the aforementioned block 304 of FIG. 3, the access control module 106 may determine whether the received transaction is permitted by comparing the user providing the transaction to the user group field 404, comparing the object 202 to which the transaction is directed to the DN field 406 and scope field 408, and/or comparing the operation of the transaction to the rights field 410 for each of the DN rules 400.

If the set of DN rules does not prohibit the transaction (*i.e.*, a DN rule 400 explicitly permits the transaction or the DN rules 400 are silent), the method 300 continues to block 306, where the access control module 106 determines whether the received transaction is permitted by a set of object class rules. The set may include any number of object class rules, including zero, although a set with zero rules is a degenerate case. The access control module 106 compares aspects of the transaction such as the user that provided the transaction, the DN of the object 202 to which the transaction is directed, the class to which the object 202 belongs, and/or the operation (*e.g*., read, write, modify, *etc.*) performed by the transaction to each of the object class rules 500 in the set until an object class rule 500 that prohibits or permits the transaction is found. If an object class rule 500 prohibits the transaction, it is denied. Otherwise, if the set of object class rules does not prohibit the transaction, the transaction may be provided to the performing entity.

An example of an object class rule 500 is shown in FIG. 5 and includes any number of fields. Suitable fields include a name field 402, a user group field 404, a DN field 406, a scope field 408, a rights field 410, and/or an information field 412 each substantially similar to those of the DN rule 400 of FIG. 4.

The object class rule 500 may also include an object class field 502 that, as the name implies, specifies one or more classes of objects to which the rule applies. As with the other fields in the object class rule 500, the object class field 502 may support regular expressions, wildcarding, and/or Boolean operators. It is noted that each of the fields of the object class rule 500 is optional and that the fields may be presented in any order.

In making the determination of block 306 of FIG. 3, the access control module 106 may determine whether the received transaction is permitted by comparing a group of the user providing the transaction to the user group field 404, comparing the object 202 to which the transaction is directed to the DN field 406 and scope field 408, comparing an object class of the object 202 to which the transaction is directed to the object class field 502, and/or comparing the operation of the transaction to the rights field 410 for each of the object class rules 500.

If the set of object class rules does not prohibit the transaction (*i.e.,* an object class rule 500 explicitly permits the transaction or the object class rules 500 are silent), the method 300 continues to block 308, where the access control module 106 provides the transaction for performing on the data structure. In some examples, the access control module 106 provides the transaction to the database module 114 of the computing system 102. In some examples, the access control module 106 provides the transaction to another computing entity in order to perform the transaction on the data structure.

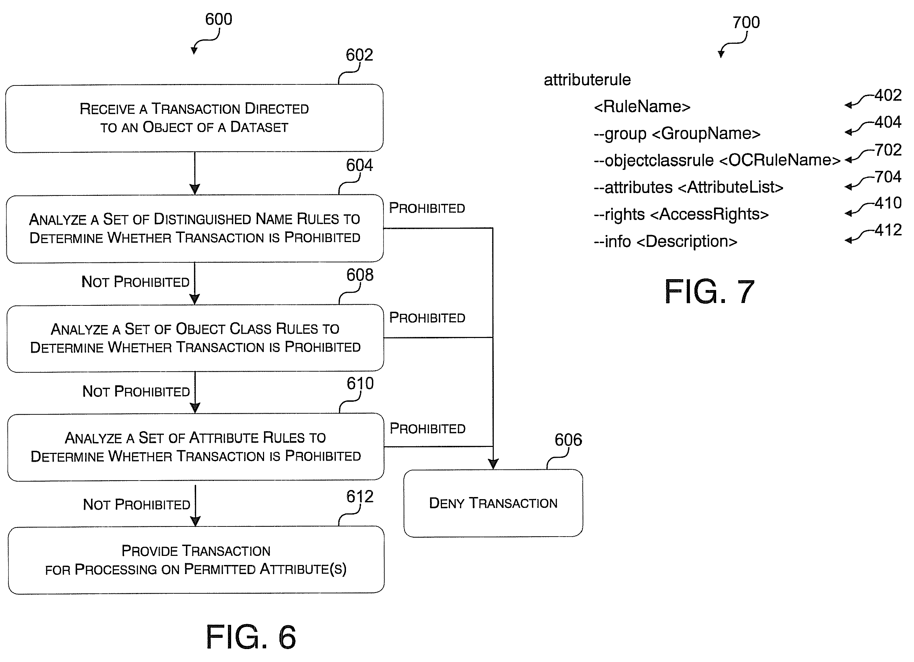

Further examples of the technique for applying access controls to a data structure such as the data structure 200 of FIG. 2 using the computing system 102 is described with reference to FIGS. 6 and 7. FIG. 6 is a flow diagram of a method 600 of access control using attribute filtering according to some examples of the present disclosure. The description of method 600 is non-limiting, and steps may be added to and omitted from the method 600 without departing from the disclosure. Unless noted otherwise, processes of the method 600 may be performed in any order including being performed concurrently by one or more entities. FIG. 7 is a diagram of an attribute rule 700 according to some examples of the present disclosure.

Referring first to block 602 of FIG. 6, the access control module 106 of the computing system 102 or other computing entity receives a data transaction that contains an instruction to access a data structure such as the data structure 200 of FIG. 2. The transaction may be received from the communication interface 104 or any other providing entity, and this may be performed substantially as described in the context of block 302 of FIG. 3.

Referring to block 604 of FIG. 6, the access control module 106 determines whether the received transaction is permitted by a set of DN rules. This may be performed substantially as described in block 304 of FIG. 3. In that regard, the access control module 106 may compare aspects of the transaction such as the user that provided the transaction, the DN of the object 202 to which the transaction is directed, and/or the operation (*e.g*., read, write, modify, *etc*.) performed by the transaction to each of the DN rules 400 in the set until a DN rule 400 that prohibits or permits the transaction is found. If a DN rule 400 prohibits the transaction, the method 600 proceed to block 606 where the access control module 106 denies the transaction. In the alternative, if the set of DN rules does not prohibit the transaction (which covers both the case where a DN rule 400 explicitly permits the transaction as well as the case where the DN rules 400 are silent), the method proceeds to block 608.

In block 608, the access control module 106 determines whether the received transaction is permitted by a set of object class rules. This may be performed substantially as described in block 306 of FIG. 3. For example, the access control module 106 may compare aspects of the transaction such as the user that provided the transaction, the DN of the object 202 to which the transaction is directed, the class to which the object 202 belongs, and/or the operation (*e.g.,* read, write, modify, *etc*.) performed by the transaction to each of the object class rules 500 in the set until an object class rule 500 that prohibits or permits the transaction is found. If an object class rule 500 prohibits the transaction, the method proceeds to block 606, where the access control module 106 denies the transaction. Otherwise, if the set of object class rules does not prohibit the transaction, the method 600 proceeds to block 610.

Referring to block 610, the access control module 106 analyzes a set of attribute rules to determine which attributes of the target object 202 the transaction has permission to access. As with the set of DN rules and the set of object class rules, the set of attribute rules may contain any number of attribute rules.

An example of an attribute rule 700 is shown in FIG. 7 and includes any number of fields. Each field is optional and the fields may be specified in any order. Suitable fields include a name field 402, a user group field 404, a rights field 410, and/or an information field 412 each substantially similar to those of the DN rule 400 of FIG. 4 and/or the object class rule 500 of FIG. 5. In some examples, the attribute rule 700 includes an object class rule field 702 that specifies those object class rules to which the attribute rule applies 700. In other words, the attribute rule 700 is applied if the specified object class rule(s) matched in block 608. Limiting attribute rules 700 to certain object class rules 500 may markedly reduce overhead of checking attribute rules 700 in block 610.

The attribute rule may include an attribute field 704 that specifies those attributes of the object 202 to which the permissions of the rights field 410 apply. The attribute field 704 may support regular expressions, wildcarding, and/or Boolean operators. In some examples, one or more attributes are grouped together into a named attribute group. The named attribute group serves as an alias for the grouped attributes. In such examples, the attribute field 704 may specify attributes according to their named attributes group.

In various examples, the access control module 106 compares one or more attributes affected by the transaction to the attribute field 704, compares a group of the user providing the transaction to the user group field 404, compares an object class rule to the object class rule field 702, and/or compares the operation of the transaction to the rights field 410 for each of the object class rules 500 to determine whether the respective attribute rule 700 applies in block 610. This process may be repeated on each attribute rule 700 of the set until an applicable rule is found.

An attribute rule 700 may allow a transaction in its entirety, prohibit the transaction in its entirely, or act as a filter by allowing the transaction to proceed on some, but not all of the attributes, specified by the transaction. Thus, when an attribute rule 700 prohibits access to some but not all of the attributes specified by the transaction, the access control module 106 may determine whether to prohibit the transaction in its entirety or to filter out the prohibited attributes. This determination may depend on a transaction type, one or more properties of the attribute(s), and/or any other criteria. Accordingly, in an example, the access control module 106 prohibits a write transaction in its entirety if any attribute 204 affected by the transaction is prohibited by an attribute rule 700 for data consistency. However, in the example, the access control module 106 permits a read transaction to proceed on any attribute that is not expressly prohibited by an attribute rule 700.

If none of the attribute rules apply, a default behavior may be used such as prohibiting access to all attributes, permitting access to all attributes, permitting access to all attributes with a name that does not include the text "hidden", etc.

In that regard, if the access control module 106 determines from the attribute rules 700 that the transaction has permission to proceed on at least one of the attributes 204, the method proceeds to block 612, where the access control module 106 provides the transaction for performing on the permitted attributes of the data structure. This may be performed substantially as described in block 308 of FIG. 3, and the access control module 106 may provide the transaction to the database module 114 of the computing system 102 or any other computing entity.

On the other hand, if the access control module 106 determines that the transaction is prohibited entirely from accessing the object 202, the access control module 106 denies the transaction in block 606.

In the examples above and others, the principles of the present disclosure address several problems specifically arising in computing and data delivery. In some examples, the types of access control rules are specifically configured to improve the speed at which access control determinations are made and render the rules easier to write and maintain. In some examples, analyzing the rules in order of increasing granularity (e.g., DN rules, then object class rules, then attribute rules) denies many or most prohibited transactions in the earlier stages of the analysis. In some examples, the concise structure of the rules allows access control rules to be cached in a cache memory resource. For example, in one such example, the access control rule memory 110 includes a cache of the database memory 118 where at least one rule of the DN rules 400, the object class rules 500, and/or the attribute rules 700 is cached.

The processes of method 300 and method 600 may be performed by any combination of hard-coded and programmable logic. In some examples, a processing resource, such as the processing resource 108 of the access control module 106, utilizes instructions stored on a non-transitory memory resource, such as the access control logic memory 112, to perform at least some of these processes. Accordingly, examples of the present disclosure take the form of a non-transitory memory resource storing instructions that perform at least part of method 300 and/or method 600.

In the foregoing description, numerous details are set forth to provide an understanding of the subject disclosed herein. However, implementations may be practiced without some or all of these details. Other implementations may include modifications and variations from the details discussed above. It is intended that the appended claims cover such modifications and variations.

## Claims

1. A non-transitory memory resource storing instructions that when executed cause a processing resource to:
receive a transaction directed to an object of a dataset;
analyze a set of distinguished name rules to determine whether the transaction is prohibited;
based on the set of distinguished name rules not prohibiting the transaction, analyze a set of object class rules to determine whether the transaction is prohibited; and
based on the set of distinguished name rules and the set of object class rules not prohibiting the transaction, provide the transaction to perform on the object.

2. The non-transitory memory resource of claim 1 storing instructions that when executed cause the processing resource to:
based on the set of distinguished name rules and the set of object class rules not prohibiting the transaction, analyze a set of attribute rules to determine whether the transaction is prohibited,
wherein the transaction is provided to perform on at least one attribute of the object as permitted by the set of attribute rules.

3. The non-transitory memory resource of claim 1, wherein at least one rule of the set of distinguished name rules specifies a user group to which it applies.

4. The non-transitory memory resource of claim 1, wherein at least one rule of the set of distinguished name rules specifies an operation of a transaction to which it applies.

5. The non-transitory memory resource of claim 1, wherein the instructions that cause the processing resource to analyze the set of distinguished name rules include instructions that cause the processing resource to: compare a distinguished name associated with the object to a distinguished name and a scope associated with a rule of the set of distinguished name rules.

6. The non-transitory memory resource of claim 1, wherein the instructions that cause the processing resource to analyze the set of object class rules include instructions that cause the processing resource to: compare an object class associated with the object to an object class associated with an object class rule of the set of object class rules.

7. The non-transitory memory resource of claim 6, wherein the instructions that cause the processing resource to analyze the set of object class rules include instructions that cause the processing resource to: compare a distinguished name associated with the object to a distinguished name and a scope associated with the object class rule.

8. A method comprising:
receiving a transaction directed to an object of a dataset;
determining whether the transaction is prohibited by a set of distinguished name rules;
based on the set of distinguished name rules not prohibiting the transaction, determining whether the transaction is prohibited by a set of object class rules; and
based on the set of distinguished name rules and the set of object class rules not prohibiting the transaction, providing the transaction for performing on the dataset.

9. The method of claim 8, wherein the object has a set of attributes, the method further comprising:
based on the set of distinguished name rules and the set of object class rules not prohibiting the transaction, determining whether the transaction is prohibited by a set of attribute rules,
wherein providing the transaction provides the transaction for performing on at least one attribute of the object as permitted by the set of attribute rules.

10. The method of claim 8, wherein determining whether the transaction is prohibited by the set of distinguished name rules includes comparing a distinguished name of the object to a distinguished name and a scope associated with a rule of the set of distinguished name rules.

11. The method of claim 8, wherein determining whether the transaction is prohibited by the set of distinguished name rules includes comparing an operation of the transaction to an operation associated with a rule of the set of distinguished name rules.

12. The method of claim 8, wherein determining whether the transaction is prohibited by the set of object class rules includes comparing an object class of the object to an object class associated with a rule of the set of object class rules.

13. The method of claim 12, wherein determining whether the transaction is prohibited by the set of object class rules includes comparing a distinguished name of the object to a distinguished name and a scope associated with a rule of the set of object class rules.

14. A computing system comprising at least one processing resource operable to:
receive a transaction directed to a data object;
determine whether the transaction is prohibited by a set of distinguished name rules;
based on the transaction not being prohibited by the set of distinguished name rules, determine whether the transaction is prohibited by a set of object class rules; and
based on the transaction not being prohibited by the set of distinguished name rules and not being prohibited by the set of object class rules, provide the transaction to perform on the data object.

15. The computing system of claim 14, wherein the at least one processing resource is further operable to:
based on the transaction not being prohibited by the set of distinguished name rules and not being prohibited by the set of object class rules, determine whether the transaction is prohibited by a set of attribute rules,
wherein the transaction is provided to perform on at least one attribute of the data object as permitted by the set of attribute rules.
